Europäisches Patentamt

European Patent Office

Office européen des brevets

(11) Veröffentlichungsnummer: **0 524 386 A2**

## EUROPÄISCHE PATENTANMELDUNG

(21) Anmeldenummer: **92107874.7**

(22) Anmeldetag: **11.05.92**

(51) Int. Cl.5: **C01B 33/12**

(30) Priorität: **18.05.91 DE 4116396**

(43) Veröffentlichungstag der Anmeldung:
**27.01.93 Patentblatt 93/04**

(84) Benannte Vertragsstaaten:
**AT BE DE ES FR GB IT NL SE**

(71) Anmelder: **GRACE GmbH**
**Postfach 1480, Erlengang 31**
**W-2000 Norderstedt(DE)**

(72) Erfinder: **Sobottka, Richard**
**Berta-Karillonstrasse 12**
**W-6520 Worms 32(DE)**

(74) Vertreter: **UEXKÜLL & STOLBERG**
**Patentanwälte**
**Beselerstrasse 4**
**W-2000 Hamburg 52(DE)**

(54) Modifizierte amorphe Kieselsäure, Verfahren zu deren Herstellung und Antiblockingmittel.

(57) Es wird eine modifizierte amorphe Kieselsäure beschrieben, die abgesehen von gegebenenfalls vorhandenen üblichen Zusätzen aus 40 bis 85 Gew.% Kieselsäure und 60 bis 15 Gew.% Paraffin-, Silikon-, pflanzlichem Öl und/oder Ethylenglykol besteht. Die modifizierte amorphe Kieselsäure wird hergestellt, indem man abgesehen von gegebenenfalls vorhandenen üblichen Zusätzen Kieselsäure mit einer solchen Menge Paraffin-, Silikon-, pflanzlichem Öl und/oder Ethylenglykol zusammenbringt, daß der Gehalt der fertigen modifizierten Kieselsäure an Paraffin-, Silikon-, pflanzlichem Öl und/oder Ethylenglykol 60 bis 15 Gew.% beträgt. Die modifizierte amorphe Kieselsäure eignet sich als Antiblockingmittel, das in vorteilhafter Weise als Konzentrat (Masterbatch) hergestellt werden kann. Überraschenderweise erniedrigt sich der Schmelzindex bei der Herstellung eines derartigen Konzentrats kaum gegenüber dem Schmelzindex des Polyolefins, das die Basis des Konzentrats darstellt. Dadurch ist es möglich, große Mengen der modifizierten Kieselsäure in sehr homogener Verteilung in das Konzentrat einzuarbeiten. Dies wiederum wirkt sich günstig aus auf die Verwendung des Konzentrats bei der Folienherstellung.

Figur 1

1 - Kieselsäure (Gelverfahren) unbehandelt
2 - Kieselsäure (Gelverfahren) behandelt mit Paraffinöl (staubfrei, erfindungsmäßiges Produkt)

Rank Xerox (UK) Business Services

Die Erfindung betrifft eine modifizierte amorphe Kieselsäure, ein Verfahren zu deren Herstellung und ein Antiblockingmittel, das aus dieser Kieselsäure besteht oder diese enthält.

Nach dem Gelverfahren hergestellte amorphe synthetische Kieselsäure, die durch Mahlung von Kieselsäuregel auf kontrollierte Teilchengrößen eingestellt wird, dient seit langem als wirkungsvolles Antiblockingmittel für Polyolefinfolien (Polyethylen, Polypropylen, Ethylen-Copolymerisate). Solche Kieselsäuren sind zum Beispiel unter dem Handelsnamen SYLOBLOC® bekannt. Trotz der guten Wirkungsweise und der gesundheitlichen Unbedenklichkeit weisen diese Kieselsäuren Nachteile beim "Handling" und beim Einarbeiten auf. So entsteht beim "Handling" unangenehmer Staub, der darüber hinaus zu Verlusten führt. Die Nachteile beim Einarbeiten können die Folienqualität negativ beeinflussen.

Auch naßchemisch hergestellte Fällungskieselsäure (z.B. aus Säure und Alkalisilikatlösung) wird als Antiblockingmittel verwendet. Derartige Kieselsäuretypen weisen ebenfalls die oben genannten Handlings- und Einarbeitungsnachteile auf.

Das Einarbeiten der Kieselsäure geschieht in den meisten Fällen über Schnecken- oder Innenkneter. Oft bedient man sich hier der Masterbatch-Technik, d.h. es werden 5, 10 oder 20 Gew%. Kieselsäure in den Kunststoff eingearbeitet. Aufgrund der Kieselsäurestruktur erhöht sich je nach Menge der Kieselsäure die Schmelzviskosität des Kunststoffs drastisch. Dies zeigt sich auch beim Vergleich des MFI (Schmelzindex) von Kunststoff ohne Kieselsäure und Kunststoff mit Kieselsäure. Kunststoff mit Kieselsäure weist nämlich einen wesentlich geringeren MFI auf. Die Erhöhung der Schmelzviskosität bei der Verarbeitung/Einarbeitung von Kieselsäure führt jedoch zu erhöhten Drücken im Extruder und zur Verminderung des Ausstoßes. Weiterhin lassen sich aufgrund der Erhöhung der Schmelzviskosität unter optimalen Produktionsbedingungen nur etwa 20 bis 25 Gew.% Kieselsäure in den Kunststoff einarbeiten. Höhere Mengen, zum Beispiel bis zu etwa 30 Gew.%, sind zwar unter Umständen möglich, doch hier muß man dann mit einem verringerten Ausstoß, mit ungenügender Verteilung der Kieselsäureteilchen und mit einem weiteren Absinken des Schmelzindexes rechnen. Ein zu niedriger Schmelzindex des Masterbatches (Kunststoff mit Kieselsäure) bedeutet, daß sich dieser beim Verarbeiten mit Folien-Kunststoff nicht richtig verteilt. Dadurch entstehen Inhomogenitäten in der Folie (Fließlinien, Gele, Kieselsäureagglomerate). Dies ist zum Beispiel der Fall, wenn man einen Masterbatch (Kunststoff mit 20 Gew.% Kieselsäure) mit einem MFI von 1,0 in einen Hochdruck-Polyethylen-Folienrohstoff mit einem MFI von 2 einarbeitet, da sich dieser Masterbatch in dem Folienrohstoff nicht homogen verteilt.

Die oben genannten Nachteile beim Handling bestehen in der großen Staubentwicklung der Kieselsäuren, die mit Schüttdichten von etwa 80 bis 250 g/l verarbeitet werden. Der beim Öffnen der Säcke oder beim Einfüllen der Kieselsäure in Trichter, Mischer oder Behälter entstehende Staub ist für das Personal nicht nur äußerst unangenehm, sondern bedeutet für den Anwender auch Verlust an Kieselsäure.

Der Erfindung lag nun die Aufgabe zugrunde, die oben genannten Nachteile von bisher als Antiblockingmittel verwendeten amorphen Kieselsäuren (vermahlene Kieselsäuregele oder Fällungskieselsäure) zu vermeiden, d.h. Kieselsäure so zu modifizieren, daß die Einarbeitbarkeit in Polyolefine verbessert wird, so daß hochkonzentrierte Masterbatche (Kieselsäure plus Kunststoff) ohne Schmelzviskositätserhöhung hergestellt werden können, Inhomogenitäten in Folien durch verbessertes Fließverhalten des verwendeten Polyolefin/Kieselsäure-Masterbatches verringert werden und der MFI (Schmelzindex) des Masterbatches (Polyolefin plus Kieselsäure) mit steigendem Kieselsäuregehalt nicht abnimmt, und die Staubentwicklung beim Handling eliminiert oder zumindest stark verringert wird.

Zur Lösung dieser Aufgabe wird eine modifizierte amorphe Kieselsäure in Form eines freifließenden Pulvers auf Basis von nach dem Gelverfahren oder durch Fällung hergestellter poröser Kieselsäure vorgeschlagen, die dadurch gekennzeichnet ist, daß sie abgesehen von gegebenenfalls vorhandenen üblichen Zusätzen aus 40 bis 85 Gew.% Kieselsäure und 60 bis 15 Gew.% Paraffin-, Silikon-, pflanzlichem Öl und/oder Ethylenglykol mit der Maßgabe besteht, daß der Gehalt an Ethylenglykol mehr als 25 Gew.% beträgt, wenn kein Paraffin-, Silikon- und/oder pflanzliches Öl als Modifizierungsmittel vorhanden ist.

Gegenstand der Erfindung ist ferner ein Verfahren zur Herstellung von modifizierter amorpher Kieselsäure, das dadurch gekennzeichnet ist, daß man amorphe Kieselsäure abgesehen von gegebenenfalls vorhandenen üblichen Zusätzen mit einer solchen Menge Paraffin-, Silikon-, pflanzlichem Öl und/oder Ethylenglykol zusammenbringt, daß der Gehalt an Paraffin-, Silikon-, pflanzlichem Öl und/oder Ethylenglykol der fertigen modifizierten amorphen synthetischen Kieselsäure 60 bis 15 Gew.% beträgt, wobei der Gehalt an Ethylenglykol bei Abwesenheit von Paraffin-, Silikon- und/oder pflanzlichem Öl größer als 25 Gew.% ist.

Gegenstand der Erfindung ist außerdem ein Antiblockingmittel, das dadurch gekennzeichnet ist, daß es aus einer erfindungsgemäß modifizierten Kieselsäure besteht oder diese enthält.

Bevorzugte Ausführungsformen und Vorteile der Erfindung sind den Unteransprüchen und der nachfolgenden Beschreibung zu entnehmen.

Es wurde überraschend gefunden, daß die oben beschriebenen Nachteile des Standes der Technik durch die erfindungsgemäße Modifizierung der Kieselsäure in erheblichem Ausmaß oder sogar ganz vermieden werden können, ohne daß durch die Modifizierung die Verwendung der Kieselsäure eingeschränkt wird, ihre Antiblockingwirksamkeit reduziert wird und die Folieneigenschaften wie Trübung, Zugfestigkeit und z.B. Gleitverhalten sich in unerwünschter Weise verändern.

Das erfindungsgemäße Produkt kann also als Antiblockingmittel in Polyolefinfolien (Polyethylen, Polypropylen) sowie in Folien aus Polyolefin-Copolymerisaten (z.B. EVA) eingesetzt werden. Die Einarbeitung kann mittels üblicher Maschinen wie Innenkneter oder Schneckenkneter in Granulate oder auch Pulver erfolgen. Das erfindungsgemäße Produkt kann dabei in hohen Konzentrationen (z.B. mittels Innenmischer 40 Gew.% Polymer plus 60 Gew.% erfindungsgemäßes Produkt) mit Polymer zu Masterbatchen verarbeitet werden. Um eine ausreichende Antiblockingwirkung zu erzielen, soll die Endkonzentration des erfindungsgemäßen Produkts in Polyolefinfolien 500 bis 8000 ppm, vorzugsweise 1000 bis 4000 ppm betragen. Die Anwendungsmöglichkeiten des erfindungsgemäßen Produkts sind im Vergleich zur Verwendung reiner Kieselsäure vereinfacht bzw. verbessert. So kann das staubfreie erfindungsgemäße Produkt ohne Auftreten von Verlust z.B. über offene Dosieranlagen (Bandwaagen) dem Polymer zugegeben werden.

Bei der erfindungsgemäß verwendeten Kieselsäure handelt es sich um poröse amorphe Kieselsäure, die nach dem Gelverfahren und anschließende Mahlung des erhaltenen Kieselsäuregels hergestellt wird. Diese poröse, amorphe Kieselsäure besitzt eine hohe innere Oberfläche, eine hohe Porosität und Teilchengrößen im Mikrometerbereich. Aufgrund ihrer "Schwammstruktur" können die Kieselsäurepartikel Flüssigkeiten wie die erfindungsgemäß verwendeten Modifizierungsmittel Paraffin-, Silikon-, pflanzliches Öl und/oder Ethylenglykol binden bzw. adsorbieren.

In gleicher Weise kann erfindungsgemäß auch naßchemisch hergestellte Fällungskieselsäure verwendet werden, die ebenfalls eine hohe innere Oberfläche, eine hohe Porosität und Teilchengrößen im Mikrometerbereich aufweist.

Durch die erfindungsgemäße Modifizierung erhält man ein staubfreies Endprodukt, das die Einarbeitung in Polyolefine stark erleichtert und die Verarbeitung mit Polyolefinen und deren Copolymerisaten zu Masterbatchen verbessert. Die Verbesserung zeigt sich dahingehend, daß der Schmelzindex eines hoch mit Kieselsäure gefüllten Masterbatches in der Regel mindestens halb so groß wie der Schmelzindex des Polyolefins ist und sich in den meisten Fällen nicht verringert, sondern sogar etwas ansteigt. Dadurch wird die hohe Konzentration an Kieselsäure (10 bis 45 Gew.%, siehe unten) im Polymer erst möglich. Eine weitere Verbesserung ist dadurch gegeben, daß bei Verwendung der erfindungsgemäßen Kieselsäure als Antiblockingmittel in Folien die Verteilung der Kieselsäureteilchen noch homogener wird und die Anzahl von Stippen, Gelen usw. in der Folie verringert wird.

Die erfindungsgemäße modifizierte Kieselsäure weist Schüttdichten von 100 bis etwa 600 g/l auf und ist ein freifließendes, trockenes Pulver. Es eignet sich als Antiblockingmittel mit mittleren Teilchengrößen von 1 bis 20 $\mu$m, wobei die Ausgangskieselsäure vorzugsweise Oberflächen nach BET von 100 bis 650 m$^2$/g und Porenvolumina von 0,8 bis 2 cm$^3$/g aufweist.

Die erfindungsgemäße modifizierte Kieselsäure besteht abgesehen von gegebenenfalls vorhandenen üblichen Zusätzen aus 40 bis 85 Gew.% Kieselsäure und 60 bis 15 Gew.% Modifizierungsmittel. Damit die erfindungsgemäße modifizierte Kieselsäure staubfrei ist, ist es bevorzugt, daß der Anteil an Kieselsäure 40 bis 65 Gew.% und der Anteil an Modifizierungsmittel 60 bis 35 Gew.% beträgt.

Das bevorzugte Modifizierungsmittel ist Paraffinöl. Hierbei handelt es sich insbesondere um flüssige, transparente, geruchfreie Öle, die den Reinheitsanforderungen des DAB entsprechen. Derartige Öle besitzen eine Viskosität von 20 bis 80 mPa s bei 40°C und eine Dichte von 0,8 bis 0,9 g/cm$^3$ bei 20°C.

Als Modifizierungsmittel können außerdem Silikonöl, pflanzliches Öl und Ethylenglykol verwendet werden. Diese Modifizierungsmittel sind Paraffinöl in bezug auf Staubfreiheit gleichwertig, wirken aber hinsichtlich Verteilung der Kieselsäureteilchen und Temperaturstabilität nicht so ausgeprägt wie Paraffinöl.

Als Silikonöl wird vorzugsweise farbloses, geruchloses Organopolysiloxan wie z.B. Methylphenylpolysiloxan mit einer Dichte von 1,04 bis 1,1 g/cm$^3$ bei 25°C und einer Viskosität von 180 bis 220 mPa s bei 25°C verwendet.

Als pflanzliches Öl können die handelsüblichen Öle wie Rizinusöl, Sojabohnenöl, Sonnenblumenöl, Olivenöl, Rapsöl und Mischungen derselben verwendet werden.

Wie oben angeben, kann die erfindungsgemäße modifizierte Kieselsäure gegebenenfalls übliche Zusätze enthalten. Hierzu gehören organische oder anorganische Substanzen, die pH-regulierend wirken oder die Einarbeitung in und die Gleitwirkung an Folien fördern. Diese Zusätze werden im allgemeinen in Mengen von bis zu 5 Gew.% auf die Kieselsäure aufgebracht.

Das Zusammenbringen von Kieselsäure und Modifizierungsmittel kann in herkömmlichen Pulvermischern erfolgen. Das Modifizierungsmittel wird der Kieselsäure durch Zutröpfeln oder Zusprühen langsam beigegeben. Dies sollte bei niedrigen Mischerdrehzahlen geschehen. Diese Verfahrensweise ergibt ein rieselfähiges, staubfreies Pulver.

Das Modifizierungsmittel kann der Kieselsäure aber auch bereits bei der Kieselsäureherstellung zugegeben werden. Bei der kontinuierlichen Herstellung der Kieselsäure kann das Modifizierungsmittel im entsprechenden Verhältnis der Kieselsäure zudosiert werden. Durch anschließende Homogenisierung- bzw. Mischschritte verteilt sich das Modifizierungsmittel entsprechend.

Die in der beschriebenen Weise mit Modifizierungsmittel beladene Kieselsäure kann anschließend sofort der Füll- und Absackstation zugeführt werden.

Die erfindungsgemäße modifizierte Kieselsäure weist gegenüber entsprechenden Kieselsäuren des Standes der Technik folgende Vorteile auf:

1. Beinahe vollkommene Staubfreiheit bei der Anwendung, so daß Staubschutzmaßnahmen so gut wie überflüssig werden, Verluste an Kieselsäure nicht auftreten und das allgemeine Handling wie Dosieren, Mischen, Abfüllen usw. stark vereinfacht wird, letzteres auch deshalb, weil durch die Modifizierung die Schüttdichte des Produkts stark erhöht und in vielen Fällen praktisch verdreifacht wird;

2. keine Erhöhung der Schmelzviskosität beim Einarbeiten in Polyolefine, d.h. allgemein verbesserte Verarbeitbarkeit ohne Erniedrigung der Durchsätze, Erreichung von 40 Gew.% und unter Umständen 45 Gew.% Kieselsäure in Polyolefinen bei der Masterbatchherstellung (Konzentrat) und damit eine verbesserte Wirtschaftlichkeit;

3. keine Erniedrigung des Schmelzindexes von Polyolefinen nach Einarbeitung bei der Masterbatchherstellung, d.h. für die Masterbatchherstellung muß nicht unbedingt ein Polymer mit besonders hohem Schmelzindex ausgewählt werden und der Masterbatch verteilt sich im Folienrohstoff homogener und verursacht weniger Fließinhomogenitäten, Stippen, Gele und Agglomerate, so daß sich die Folienqualität verbessert;

4. Bei vorgegebenem Polymer mit bekanntem Schmelzindex kann durch die Verwendung einer bestimmten modifizierten Kieselsäure der gewünschte Schmelzindex von einem herzustellenden Masterbatch bereits vor dem Batchen bestimmt bzw. ausgewählt werden, was in vielen Fällen eine Prozeßverbesserung bedeutet;

5. leicht verbesserte Antiblockingwirkung.

Das oben erwähnte Bestimmen bzw. Auswählen des Schmelzindexes von Masterbatchen aus erfindungsgemäßer modifizierter Kieselsäure und Polyolefin kann etwa in der folgenden Weise erfolgen, da der Schmelzindex des Ausgangspolymeren bekannt ist:

MFI des Ausgangspolyethylens z.B. 3 g/10 min (190/2,16)

| Wunsch MFI von Masterbatch mit 15 30 Gew.% Kieselsäure soll liegen bei | Einstellung des gewünschten MFI durch Verwendung der modifizierten Kieselsäure mit Gew.% Kieselsäure : Paraffinöl |
|---|---|
| 1 - 2 | 70 : 30 |
| 2 - 3 | 65 : 35 |
| 5 - 6 | 55 : 45 |
| um 1 | 85 : 15 |
| 1 - 2 | 70 : 30 |
| 3 - 4 | 55 : 45 |

**Beispiel 1**

Eine bestimmte Menge Kieselsäure (SYLOBLOC 45) wurde in einen Pulvermischer (Typ Henschel) vorgelegt. Die Kieselsäure besaß ein Porenvolumen von 1,2 cm³/g, eine mittlere Teilchengröße von 4 μm, eine BET-Oberfläche von 500 m²/g, eine Öladsorption von 200 g/100 g und eine Schüttdichte von etwa 180 g/l. Bei niedrigen Mischerdrehzahlen wurde ein Paraffinöl der Fa. Merck und zwar Paraffin dünnflüssig DAB, CAS-Nr.: 8012-95-1, Dichte bei 20°C etwa 0,88 g/cm³, Viskosität bei 20°C < 70 mPa s zugetröpfelt oder

EP 0 524 386 A2

mittels Sprühflasche zugespritzt. Nach Zugabe von 10, 20, 30, 40 und 50 Gew.% Paraffinöl wurden jeweils Proben aus dem Mischer entnommen. Die erhaltenen Ergebnisse sind in der folgenden Tabelle wiedergegeben.

Tabelle

| Probe Nr. | Teile | | Verhalten der Proben |
|---|---|---|---|
| | Kieselsäure | Paraffinöl | |
| 1 | 90 | 10 | sehr staubig, trockenes Pulver |
| 2 | 80 | 20 | staubig, trockenes Pulver |
| 3 | 70 | 30 | weniger staubend, trockenes Pulver |
| 4 | 60 | 40 | weniger staubend, Pulver, kleine Bröckelchen |
| 5 | 50 | 50 | nicht staubend, Pulver und Bröckelchen |

**Beispiel 2**

Die Versuchsdurchführung von Beispiel 1 wurde wiederholt, wobei 55 Gew.% Kieselsäure und 45 Gew.% Paraffinöl verwendet wurden. Das erhaltene Produkt ergab Staubfreiheit beim Handling und verbesserte Einarbeitbarkeit in Polyolefine, d.h. keine Schmelzindexerniedrigung bei Masterbatchen mit hohen Kieselsäureanteilen, optimale homogene Verteilung der Kieselsäureteilchen in Folien und dadurch eine verbesserte Antiblockingwirkung und Verringerung der Inhomogenitäten in Folien. Die Verwendung von weniger als 45 Gew.% Paraffinöl führte im Vergleich zu reiner Kieselsäure ebenfalls zu einer verbesserten Einarbeitbarkeit in Polyolefine. Die Staubfreiheit war jedoch nicht mehr gegeben.

**Beispiel 3**

Entsprechende Untersuchungen wie in den Beispielen 1 und 2 wurde mit zwei anderen Kieselsäuren durchgeführt. Die erste Kieselsäure (SYLOBLOC 47) besaß ein Porenvolumen von 1,2 cm$^3$/g, eine mittlere Teilchengröße von 5 $\mu$m, eine BET-Oberfläche von 400 m$^2$/g, eine Öladsorption von 200 g/100 g und eine Schüttdichte von etwa 180 g/l. Die zweite Kieselsäure (SYLOBLOC 44) besaß ein Porenvolumen von 1,6 cm$^3$/g, eine mittlere Teilchengröße von 2 $\mu$m, eine BET-Oberfläche von 400 m$^2$/g, eine Öladsorption von 300 g/100 g und eine Schüttdichte von etwa 100 g/l. Mischungen der ersten Kieselsäure mit 40 Gew.% Paraffinöl und der zweiten Kieselsäure mit 50 bis 55 Gew.% Paraffinöl waren so gut wie staubfrei. Die anwendungstechnischen Untersuchungen dieser Produkte ergaben die gleichen Vorteile wie in Beispiel 2 angegeben.

**Beispiel 4**

Beispiel 1 wurde wiederholt, wobei anstelle von Paraffinöl Rizinusöl, Silikonöl (Wacker AP 200, Organopolysiloxan entsprechend den obigen Angaben in der Beschreibung), Ethylenglykol und Sojabohnenöl eingesetzt wurden. Bei Zugabe von 85 bis 90 Gewichtsteilen dieser Modifizierungsmittel je 100 Gewichtsteile Kieselsäure wurden staubfreie Antiblockingmittel erhalten. Die anwendungstechnischen Untersuchungen ergaben, daß diese Mischungen ebenfalls Vorteile im Vergleich zu reiner unmodifizierter Kieselsäure aufwiesen. Allerdings waren diese Vorteile nicht so ausgeprägt wie bei der Verwendung von Paraffinöl. So konnten die mit diesen Modifizierungsmitteln ausgerüsteten Kieselsäuren nicht in so hohen Konzentrationen wie die mit Paraffinöl ausgerüsteten Modifizierungsmittel in Polyethylen eingearbeitet werden (siehe Tabelle). Wahrscheinlich aufgrund der geringeren Temperaturstabilität von Sojabohnenöl, zeigten Masterbatche aus Polyethylen und mit Sojabohnenöl modifizierter Kieselsäure Farbveränderungen.

Hinsichtlich der im Masterbatch erzielbaren Kieselsäurekonzentrationen (in Polyethylen) und hinsichtlich des MFI (Schmelzindex) der Masterbatches im Vergleich zum Ausgangspolyethylen lassen sich die erhaltenen Ergebnisse zusammenfassend wie folgt darstellen:

5

| Kieselsäure mit | erzielbare Konzentration* in Polyethylen** Gew.% | MFI 190/2,16 des Konzentrats g/10 min |
|---|---|---|
| ohne | 20 - 25 | ca. 0,3 |
| Paraffinöl | 40 - 45 | ca. 7,0 |
| Rizinusöl | 30 - 35 | ca. 1,8 |
| Silikonöl | 30 - 35 | ca. 0,8 |
| Ethylenglykol | 30 - 35 | ca. 0,8 |
| Sojabohnenöl | 30 - 35 | ca. 3,2 |

* Bezogen auf reine unmodifizierte Kieselsäure
** Hochdruck-Polyethylen Lupolen 3020 K, MFI 190/2,16 = 3,2 g/10 min

**Beispiel 5**

Die in Beispiel 1 verwendete Kieselsäure wurde mit dem oben genannten Paraffinöl bis zur vollkommenen Staubfreiheit behandelt. Die Behandlung geschah wiederum durch Besprühung der Kieselsäure unter gleichzeitigem Mischen in einem Pulvermischer. Das hergestellte Produkte bestand schließlich aus 55 Gew.% Kieselsäure und 45 Gew.% Paraffinöl. Es wurde unter den folgenden Bedingungen in einer Menge von 10 Gew.% in Hochdruck-Polyethylenpulver eingearbeitet (Masterbatch X).

| Mischer: | Pulvermischer (Papenmeier) |
|---|---|
| Extruder: | Leistritz LSM 34 GL |
| Verarbeitungstemperatur: | 160 - 170°C |
| Massetemperatur: | 171°C |
| Entgasung: | keine |
| Siebeinsätze: | keine |
| Ausstoß: | 11,1 kg/h |
| Polyethylen: | LD-PE 22, Stamylan 1722 P 500 |
| Granulatform: | Zylinder |

Bei diesem Versuch traten im Vergleich zur herkömmlichen unmodifizierten Kieselsäure folgende Vorteile auf:
- beim Mischen keine Staubentwicklung, kein Entmischen, keine Brückenbildung, störungsfreie Dosierung
- konstanter Ausstoß bei konstanten Extrusionsbedingungen
- Schmelzindex 190/2,16 vom gefertigten Konzentrat 25,2 g/10 min (Schmelzindex vom Grundmaterial ca. 22 g/10 min.).

Der so hergestellte Masterbatch wurde zur Folienherstellung verwendet. Dazu wurde der Masterbatch so mit Lupolen 2420 H (Hochdruck-Polyethylen BASF AG) gemischt, daß die fertigen Mischungen 0,1 bzw. 0,2 Gew.% modifizierte Kieselsäure enthielten. Die Folienherstellung erfolgte auf einem Extruder mit Blasdüse unter den folgenden Bedingungen:

| Extruder: | Kiefel Rotex 25 |
|---|---|
| Schneckendurchmesser: | 25 mm |
| Düsendurchmesser: | 50 mm |
| Siebeinsätze: | grob |
| Ausstoß: | 10 kg/h |
| Foliendicke: | 40 µm |
| Liegebreite: | 180 mm |

Zum Vergleich wurden Folien hergestellt, in die reine unmodifizierte Kieselsäure in Form eines 10 %-igen Konzentrats (Masterbatch Y) eingearbeitet wurde. Die Endkonzentration an Kieselsäure in der Folie betrug 0,1 bzw. 0,2 Gew.%.

Zur Bestimmung des Blockverhaltens wurden Folienmuster bei folgenden Bedingungen künstlich verblockt:

|  | A | B |
|---|---|---|
| Temperatur, °C | 70 | 60 |
| Belastung, $N/cm^2$ | 1 | 0,3 |
| Zeit, min | 60 | 180 |

Anschließend wurde die Kraft gemessen, die nötig ist, um zwei verblockte Folienmuster voneinander zu trennen (Prüfgerät: Fa. Davenport, 2-Platten-Methode). Die Ergebnisse sind in der folgenden Tabelle wiedergegeben.

| Folientyp | verblockt nach | Blockkräfte [N]* A | Blockkräfte [N]* B |
|---|---|---|---|
| ohne Zusatz | | >1 | >1 |
| mit 0,1 Gew.% erfindungsgemäßem Produkt ≙ 0,055 Gew.% reine Kieselsäure | | 0,76 | 0,49 |
| mit 0,2 Gew.% erfindungsgemäßem Produkt ≙ 0,11 Gew.% reine Kieselsäure | | 0,34 | 0,20 |
| mit 0,1 Gew.% reine Kieselsäure | | 0,82 | 0,48 |
| mit 0,2 Gew.% reine Kieselsäure | | 0,37 | 0,22 |

* Mittelwerte aus 6 Einzelmessungen

Die Ergebnisse zeigen, daß die Folie mit dem erfindungsgemäßen Antiblockingmittel praktisch die gleichen Blockwerte wie die Folie mit reiner unmodifizierte Kieselsäure aufweist. In einigen Fällen sind die Blockkräfte an den Folien mit dem erfindungsgemäßen Antiblockingmittel sogar etwas niedriger.

An 5 Folienstücken (flachgelegte Blasfolie) von etwa 50 cm Länge und 18 cm Breite wurden die visuell sichtbaren Stippen/Gele usw. gezählt. Hierbei wurde auch noch eine Folie mitbeurteilt, bei der ein hochkonzentrierter Masterbatch Polyethylen/erfindungsgemäßes Produkt (Masterbatch Z) verwendet wurde. Dieser Masterbatch wurde hergestellt, indem in einen Innenmischer 660 g Polyethylen vorgelegt wurden, 800 g erfindungsgemäße modifizierte Kieselsäure (45 Gew.% Paraffinöl) zugegeben wurden, 5 Minuten lang gemischt wurde und anschließend granuliert wurde. Aufgrund der gewählten Mengenverhältnisse betrug der Kieselsäureanteil 440 g oder 40 Gew.% bezogen auf Polymer plus Kieselsäure (1100 g).

Dieser hochkonzentrierte Masterbatch wurde so mit dem Folienrohstoff Lupolen 2420 H vermischt, daß die Endkonzentration an reiner unmodifizierter Kieselsäure 0,1 Gew.% betrug. Anschließend wurde die Folie wie oben beschrieben hergestellt.

Die erhaltenen Ergebnisse (Anzahl der visuell sichtbaren Stippen, Gele usw.) sind in der folgenden Tabelle wiedergegeben, wobei die Größe der berücksichtigten Inhomogenitäten etwa >200 $\mu$m betrug.

| Muster* Nr. | Folie ohne Zusatz | Folie mit Zusatz von | | | | |
|---|---|---|---|---|---|---|
| | | erfindungsgemäßem Produkt | | | reiner Kieselsäure[2] | |
| | | Gew.% reine Kieselsäure | | | Gew.% Kieselsäure | |
| | | 0,055[1] | 0,11[1] | 0,1[3] | 0,1 | 0,2 |
| 1 | 3 | 14 | 13 | 14 | 20 | 18 |
| 2 | 3 | 9 | 14 | 19 | 15 | 32 |
| 3 | 2 | 11 | 16 | 11 | 18 | 28 |
| 4 | 4 | 8 | 15 | 8 | 21 | 23 |
| 5 | 2 | 10 | 12 | 16 | 16 | 21 |
| Gesamtzahl | 14 | 52 | 70 | 68 | 90 | 122 |

1 Masterbatch X

2 Masterbatch Y

3 Masterbatch Z

* Es wurden ca. 100 lfm Folie hergestellt.

Die Einzelmuster wurden wie folgt von der Folie genommen:

Muster 1, danach ca. 5 m ohne Berücksichtigung

Muster 2, danach ca. 5 m ohne Berücksichtigung usw.

Wie die obigen Ergebnisse zeigen, ist das "Stippen-Niveau" bei den Folien mit dem erfindungsgemäßen Antiblockingmittel niedriger als bei den Folien mit reiner Kieselsäure. Sogar die mit dem hochkonzentrierten Masterbatch Polyethylen/erfindungsgemäßes Antiblockingmittel ausgerüstete Folie zeigte weniger Stippen als die Folien, die mit einem 10% reine Kieselsäure enthaltenden Masterbatch ausgerüstet wurden.

## Beispiel 6

Gemäß Beispiel 1 wurde eine modifizierte Kieselsäure hergestellt, die 45 Gew.% Paraffinöl enthielt. Diese wurde mittels Innenkneter, Typ Werner und Pfleiderer in zwei Hochdruck-Polyethylen-Typen eingearbeitet und zwar

a) in Lupolen 1800 S (BASF AG, MFI 1,90/2,16 = 17 g/10 min) und

b) in Lupolen 3020 K (BASF AG, MFI 1,90/2,16 = 3 g/10 min).

Die eingearbeiteten Mengen an modifizierter Kieselsäure wurden so gewählt, daß die Endkonzentrationen (Soll-Konzentration) an reiner unmodifizierter Kieselsäure 5, 10, 20, 25, 30 und 40 Gew.% betrugen.

In einem weiteren Versuch wurde die gleiche Kieselsäure rein, d.h. unmodifiziert, in die genannten Polymere eingearbeitet. Die eingesetzten Mengen an Kieselsäure betrugen 5, 10, 20, 25, 30 und 40 Gew.%.

Entsprechende Versuche wurden auch mit Fällungskieselsäure durchgeführt. Die verwendete Fällungskieselsäure ist unter dem Handelsnamen Kieselsäure FK 310 (Degussa) bekannt. Typische vom Hersteller angegebene Kenngrößen sind die mittlere Teilchengröße von 2 bis 3 $\mu$m, die BET-Oberfläche von 650 $m^2/g$, der $SiO_2$-Gehalt von 99%, die Stampfdichte von 110 g/l und der Trocknungsverlust (2 h, 105°C) von 2,5%. Diese Fällungskieselsäure wurde, wie in Beispiel 1 beschrieben, mit Paraffinöl behandelt, so daß das resultierende staubfreie Produkt ebenfalls 45 Gew.% Paraffinöl enthielt. Die so modifizierte Fällungskieselsäure wurde in Mengen von 10, 20 und 30 Gew.% (berechnet als reine Kieselsäure) in das oben unter b) genannte Polyethylen eingearbeitet.

In einem weiteren Versuch wurde die gleiche Fällungskieselsäure rein, d.h. unmodifiziert, in das oben unter b) genannte Polyethylen eingearbeitet. Die eingesetzten Mengen betrugen 10, 20 und 25 Gew.%.

Bei dieser Einarbeitungsweise wurde zunächst eine bestimmte Menge Polymer in den Kneter gegeben und durch Temperatur und Scherung zum Schmelzen gebracht. Anschließend erfolgte die Zugabe der Kieselsäure. Nach weiterem 5-minütigen Kneten (Mischen) von Polymer und Kieselsäure wurde das Konzentrat dem Mischer entnommen. Dabei wurde beobachtet, daß die nicht-modifizierten Kieselsäuren bei der Zugabe erheblich staubten (Verlust von Kieselsäure), 30 Gew.% oder mehr der nicht-modifizierten Kieselsäuren unter den vorgegebenen Bedingungen nicht eingearbeitet werden konnten (das geschmolzene Polymer vermischte sich mit dieser großen Menge Kieselsäure nicht) und die erfindungsgemäßen Produkte problemlos ohne Staubentwicklung dem geschmolzenen Polymer in einer auf Kieselsäure berechneten Menge von bis zu 40 Gew.% zugegeben werden konnten.

Die so hergestellten Masterbatche wurden hinsichtlich des $SiO_2$-Gehaltsund des Schmelzindexes

untersucht. Dabei ergab sich, daß bei den Masterbatchen mit nicht-modifizierter Kieselsäure jeweils größere Abweichungen der Ist-Konzentration von der Soll-Konzentration als bei den Konzentraten mit den erfindungsgemäßen Produkten festgestellt wurden. Bei einer Soll-Konzentration von beispielsweise 20 Gew.% wurde bei dem Masterbatch mit nichtmodifizierter Kieselsäure (SYLOBLOC® 45) eine Konzentration von 17,9 Gew.% und bei dem Masterbatch mit erfindungsgemäßer modifizierter Kieselsäure eine Konzentration von 19,1 Gew.% ermittelt (Abweichungen bis zu etwa 1 Gew.% sind durch Feuchtigkeitsverlust erklärbar, größere Abweichungen können Verluste durch Staub bedeuten).

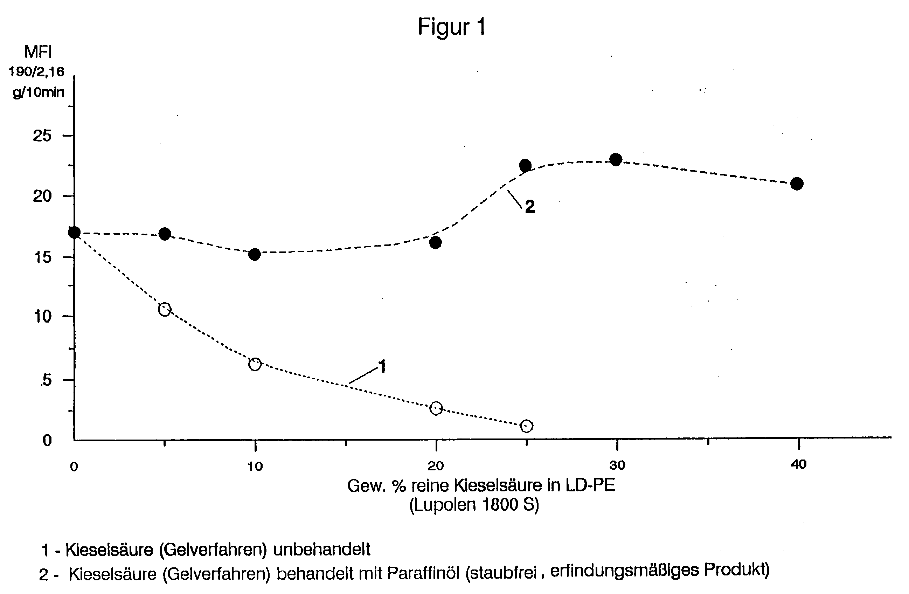

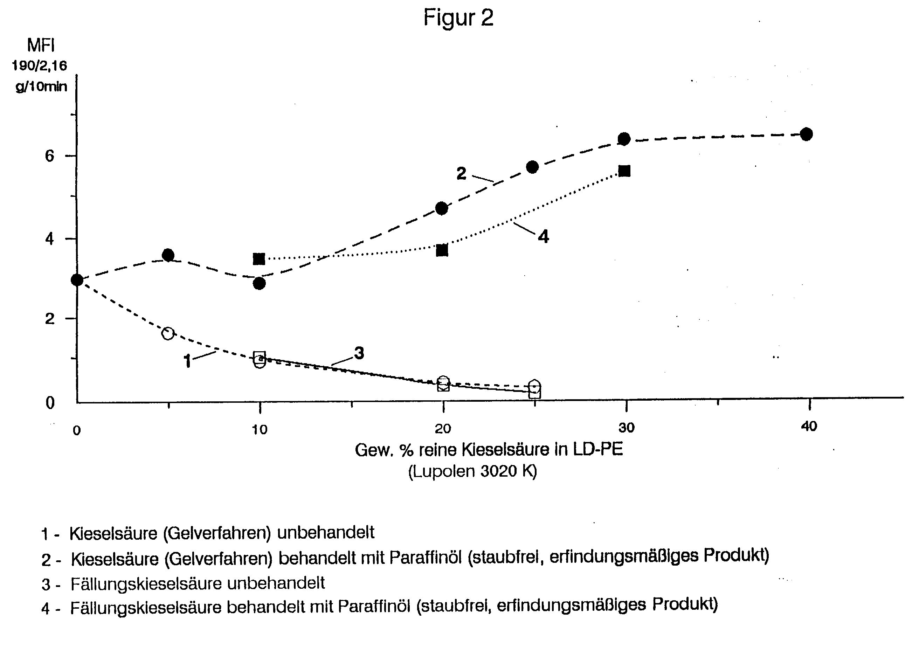

Die an den verschiedenen Masterbatchen gemessenen Schmelzindizes (190/2,16) sind in den Figuren 1 und 2 graphisch wiedergegeben. Es ist zu erkennen, daß bei Einsatz von steigenden Mengen nichtmodifizierter Kieselsäure der Schmelzindex drastisch erniedrigt wird. Dies führte dann auch dazu, daß Mengen von mehr als 25 Gew.% praktisch nicht mehr einarbeitbar waren. Es ist aber auch zu erkennen, daß bei Einsatz der erfindungsgemäßen Produkte der Schmelzindex bei höheren Zugabemengen sogar noch ansteigt. Dadurch wird die Einarbeitung von höheren Mengen erst möglich.

**Beispiel 7**

Eine Kieselsäure (SYLOBLOC 47, mittlere Teilchengröße 5 $\mu$m, BET-Oberfläche 400 $m^2$/g) wurde wie in Beispiel 1 beschrieben modifiziert. Es wurde schließlich ein staubfreies Produkt aus 60 Gew.% Kieselsäure und 40 Gew.% Paraffinöl erhalten. Dieses Produkt wurde wie in Beispiel 2 beschrieben in Hochdruck-Polyethylen Lupolen 3020 K eingearbeitet. Die eingearbeitete Menge der modifizierten Kieselsäure betrug 18 Gew.%, d.h. der reine Kieselsäuregehalt betrug 10,8 Gew.% In entsprechender Weise wurde nicht-modifizierte Kieselsäure (SYLOBLOC 47) 10 gew.%ig in dasselbe Polymer eingearbeitet. Während das Polymer ohne Zusatz einen Schmelzindex (190/2,16) von 3,2 g/10 min aufwies, besaß das Konzentrat mit reiner Kieselsäure einen Schmelzindex von 1,6 g/10 min und das Konzentrat mit 18 Gew.% erfindungsgemäßer modifizierter Kieselsäure einen Schmelzindex von 4,2 g/10 min.

Zwecks Blasfolienherstellung wurde Hochdruck-Polyethylen Lupolen 2420 H so mit den gefertigten Masterbatchen vermischt, daß Kieselsäure-Endkonzentrationen von 0,2 und 0,3 Gew.% in den Mischungen erhalten wurden. Aus diesen Mischungen wurden Blasfolien von 40 $\mu$m Dicke extrudiert. An den erhaltenen Blasfolien wurden folgende Messungen und Beobachtungen gemacht.

Die Folien mit der erfindungsgemäßen modifizierten Kieselsäure unterschieden sich hinsichtlich der mechanischen Eigenschaften (Zugfestigkeit, Dehnung) nicht von den Folien mit der reinen Kieselsäure. Letztere wiesen aber mehr Stippen/Gele als die Folien mit der erfindungsgemäßen modifizierten Kieselsäure auf. Zur Bestimmung des Blockverhaltens wurden Folienmuster künstlich bei folgenden Bedingungen verblockt:

|  | A | B |
|---|---|---|
| Temperatur ° C | 70 | 60 |
| Belastung N/cm$^2$ | 1 | 0,3 |
| Zeit, min | 60 | 180 |

Anschließend wurde die Kraft gemessen, die nötig ist, um zwei verblockte Folienmuster voneinander zu trennen. Dies geschah mit dem Blocking-Prüfgerät der Firma Davenport (2-Platten-Methode).

|  | verblockt nach | Blockkräfte [N] | |
|---|---|---|---|
|  |  | A | B |
| Folie mit 0,33 Gew.% erfindungsgemäßem Produkt[1] |  | 0,30 | 0,04 |
| Folie mit 0,5 Gew.% erfindungsgemäßem Produkt [2] |  | 0,17 | 0,00 |
| Folie mit 0,2 Gew.% Kieselsäure |  | 0,70 | 0,20 |
| Folie mit 0,3 Gew.% Kieselsäure |  | 0,22 | 0,00 |
| Folie ohne Kieselsäure |  | >1 | 1,00 |

[1] entspricht 0,2 Gew.% Kieselsäure

[2] entspricht 0,3 Gew.% Kieselsäure

Die erhaltenen Ergebnisse zeigen, daß bei Einsatz des erfindungsgemäßen Produkts das Antiblockverhalten von Folien verbessert wurde. Diese Verbesserung im Vergleich zur normalen Kieselsäure beruht auf einer homogeneren Verteilung der einzelnen Teilchen in der Folie.

**Beispiel 8**

Eine Kieselsäure (SYLOBLOC 45) wurde a) mit 15 Gew.% und b) mit 30 Gew.% Paraffinöl wie in Beispiel 1 beschrieben beladen. Die so hergestellten Produkte zeigten bei der Verarbeitung Staubentwicklung, die aber bei dem Produkt mit 30 Gew.% Paraffinöl geringer war.

Beide Produkte wurden mittels Innenmischer in Hochdruck-Polyethylen Lupolen 3020 K (MFI 190/2,16 = 3,2) eingearbeitet. Die eingearbeiteten Mengen wurden jeweils so gewählt, daß der Anteil reiner Kieselsäure 15 bzw. 30 Gew.% betrug. An den hergestellten Konzentraten wurde der Schmelzindex 190/2,16 bestimmt. Die Ergebnisse sind in der folgenden Tabelle zusammengestellt.

**Schmelzindex an Masterbatch**

| Konzentration Gew.% | | Kieselsäure : Paraffinöl | |
|---|---|---|---|
| Kieselsäure | erfindungsgemäßes Produkt | 85 : 15 | 70 : 30 |
| ca. 30 | 36 | 0,4 |  |
| ca. 15 | 18 | 0,9 |  |
| ca. 30 | 42 |  | 1,5 |
| ca. 15 | 21 |  | 1,6 |

Vergleich:
MFI 190/2,16
bei Einsatz von 15 Gew.% reiner Kieselsäure: 0,5 g/10 min
bei Einsatz von 25 Gew.% reiner Kieselsäure: 0,3 g/10 min
bei Einsatz von 30 Gew.% reiner Kieselsäure: n.a.

Wie die obigen Ergebnisse zeigen, ließen sich Masterbatche mit 30 Gew.% Kieselsäure bei Verwendung der erfindungsgemäßen modifizierten Kieselsäure herstellen. Bei Einsatz des Produktes mit 15 Gew.% Paraffinöl sank der Schmelzindex nach Einarbeitung im Polymer allerdings stark (besonders bei Zugabe von 30 Gew.% berechnet auf Kieselsäure).

Das Produkt mit 30 Gew.% Paraffinöl verleiht den hergestellten Masterbatchen aber auch noch bei Konzentrationen von 30 Gew.%, berechnet auf Kieselsäure, eine gute Verarbeitbarkeit bzw. einen Schmelzindex von größer 1.

Dieses Beispiel zeigt also, daß in den Fällen, in denen absolute Staubfreiheit nicht erforderlich ist, auch erfindungsgemäße Produkte mit 70 Gew.% Kieselsäure und 30 Gew.% Paraffinöl zu einer verbesserten Verarbeitbarkeit führen bzw. daß man Masterbatche mit 30 Gew.% und mehr Kieselsäure ausrüsten kann.

**Beispiel 9**

Es wurden modifizierte Kieselsäuren hergestellt, indem 55 Gewichtsteile Kieselsäure (SYLOBLOC 45) mit 45 Gewichtsteilen Rizinusöl, Silikonöl (siehe Beispiel 4) oder Ethylenglykol in der in Beispiel 1 beschriebenen Weise behandelt wurden. Die erhaltenen Produkte waren praktisch staubfrei. 15 und 30 Gew.% (berechnet auf Kieselsäure) dieser erfindungsgemäßen Produkte wurden wie in Beispiel 2 beschrieben in Hochdruck-Polyethylen Lupolen 3020 K eingearbeitet. An den Masterbatches wurden folgende Schmelzindizes (190/2,16) ermittelt.

| Masterbatch mit | Schmelzindex (g/10 min) Gew.% Kieselsäure | |
|---|---|---|
| | 15 | 30 |
| reiner Kieselsäure | 0,8 | n.a. |
| Kieselsäure/Paraffinöl | 4,0 | 6,2 |
| Kieselsäure/Rizinusöl | 2,3 | 1,9 |
| Kieselsäure/Silikonöl | 1,6 | 0,8 |
| Kieselsäure/Ethylenglykol | 1,7 | 0,8 |

Wie die Ergebnisse zeigen, lassen sich auch bei Modifizierung der Kieselsäure mit Rizinusöl, Silikonöl oder Ethylenglykol Konzentrationen von 30 Gew.% Kieselsäure im Polymer erzielen, was mit reiner Kieselsäure kaum möglich war. Anders als bei der Modifizierung mit Paraffinöl sinkt der Schmelzindex der Masterbatche jedoch mit zunehmendem Kieselsäuregehalt. Allerdings ist dieser Abfall des Schmelzindexes nicht so drastisch wie bei der Verwendung reiner Kieselsäure, so daß sich auch Rizinusöl, Silikonöl und Ethylenglykol durchaus zu der erfindungsgemäßen Modifizierung von Kieselsäure eignen.

Die hergestellten Masterbatche wurden so mit Hochdruck-Polyethylen (Lupolen 2420 H, BASF AG) vermischt, daß Endkonzentrationen von 0,2 und 0,3 Gew.% reine Kieselsäure erhalten wurden. Von diesen Mischungen wurden dünne Flachfolien (etwa 30 $\mu$m Dicke) extrudiert. Die visuelle Beurteilung der Folien ergab, daß bezüglich Stippenfreiheit ein erfindungsgemäßes Produkt mit Silikonöl den erfindungsgemäßen Produkten mit Rizinusöl bzw. Ethylenglykol vorzuziehen ist.

**Patentansprüche**

1.  Modifizierte amorphe Kieselsäure in Form eines freifließenden Pulvers auf Basis von nach dem Gelverfahren oder durch Fällung hergestellter poröser Kieselsäure, **dadurch gekennzeichnet,** daß sie abgesehen von gegebenenfalls vorhandenen üblichen Zusätzen aus 40 bis 85 Gew.% Kieselsäure und 60 bis 15 Gew.% Paraffin-, Silikon-, pflanzlichem Öl und/oder Ethylenglykol mit der Maßgabe besteht, daß der Gehalt an Ethylenglykol mehr als 25 Gew.% beträgt, wenn kein Paraffin-, Silikon- und/oder pflanzliches Öl als Modifizierungsmittel vorhanden ist.

2.  Kieselsäure nach Anspruch 1, **dadurch gekennzeichnet,** daß der Anteil der Kieselsäure 40 bis 65 Gew.% und der Anteil an Paraffin-, Silikon-, pflanzlichem Öl und/oder Ethylenglykol 60 bis 35 Gew.% beträgt.

3.  Kieselsäure nach Anspruch 1 oder 2, **dadurch gekennzeichnet,** daß das pflanzliche Öl Rizinusöl und/oder Sojabohnenöl ist.

4.  Kieselsäure nach Anspruch 1 oder 2, **dadurch gekennzeichnet,** daß der Anteil an Paraffinöl 40 bis 55 Gew.% beträgt.

5. Kieselsäure nach einem der Ansprüche 1 bis 4, **dadurch gekennzeichnet,** daß sie eine Schüttdichte von 100 bis 600 g/l aufweist.

6. Verfahren zur Herstellung einer modifizierten amorphen Kieselsäure in Form eines freifließenden Pulvers auf Basis von nach dem Gelverfahren oder durch Fällung hergestellter poröser Kieselsäure, **dadurch gekennzeichnet,** daß man abgesehen von gegebenenfalls vorhandenen üblichen Zusätzen Kieselsäure mit einer solchen Menge Paraffin-, Silikon-, pflanzlichem Öl und/oder Ethylenglykol zusammenbringt, daß der Gehalt der fertigen modifizierten Kieselsäure an Paraffin-, Silikon-, pflanzlichem Öl und/oder Ethylenglykol 60 bis 15 Gew.% beträgt, wobei der Gehalt an Ethylenglykol bei Abwesenheit von Paraffin-, Silikon- und/oder pflanzlichem Öl größer als 25 Gew.% ist.

7. Antiblockingmittel, **dadurch gekennzeichnet,** daß es aus einer modifizierten Kieselsäure gemäß einem der Ansprüche 1 bis 5 besteht oder diese enthält.

8. Antiblockingmittel nach Anspruch 7, **dadurch gekennzeichnet,** daß es in Form eines Konzentrats vorliegt, das neben der modifizierten Kieselsäure eine überwiegende Menge Polyolefin enthält.

9. Antiblockingmittel nach Anspruch 8, **dadurch gekennzeichnet,** daß es bezogen auf reine, nicht modifizierte Kieselsäure plus Polyolefin 10 bis 45 Gew.% reine, nicht modifizierte Kieselsäure und 90 bis 25 Gew.% Polyolefin enthält.

10. Antiblockingmittel nach Anspruch 8 oder 9, **dadurch gekennzeichnet,** daß es einen Schmelzindex aufweist, der mindestens halb so groß wie der Schmelzindex des Polyolefins ist.

11. Antiblockingmittel nach Anspruch 10, **dadurch gekennzeichnet,** daß es einen gleich großen oder höheren Schmelzindex als das Polyolefin aufweist.

Figur 1

1 - Kieselsäure (Gelverfahren) unbehandelt

2 - Kieselsäure (Gelverfahren) behandelt mit Paraffinöl (staubfrei, erfindungsmäßiges Produkt)

Figur 2

MFI
190/2,16
g/10min

Gew. % reine Kieselsäure in LD-PE
(Lupolen 3020 K)

1 - Kieselsäure (Gelverfahren) unbehandelt
2 - Kieselsäure (Gelverfahren) behandelt mit Paraffinöl (staubfrei, erfindungsmäßiges Produkt)
3 - Fällungskieselsäure unbehandelt
4 - Fällungskieselsäure behandelt mit Paraffinöl (staubfrei, erfindungsmäßiges Produkt)

14